Europäisches Patentamt
European Patent Office
Office européen des brevets

(11) Veröffentlichungsnummer: **0 075 865 A2**

# EUROPÄISCHE PATENTANMELDUNG

Anmeldenummer: 82108797.0

Anmeldetag: 23.09.82

(51) Int. Cl.³: C 07 F 7/12
D 06 M 13/18

Priorität: 25.09.81 DE 3138235

Veröffentlichungstag der Anmeldung: 06.04.83 Patentblatt 83/14

Benannte Vertragsstaaten: DE FR GB IT

(71) Anmelder: WACKER-CHEMIE GMBH
Prinzregentenstrasse 22
D-8000 München 22(DE)

(72) Erfinder: Lindner, Tassilo, Dr., Dipl.-Chem.
Neuhauserstrasse 10
D-8261 Mehring-Öd(DE)

(72) Erfinder: Zeller, Norbert, Dr., Dipl.-Chem.
Schweitzerstrasse 5
D-8263 Burghausen(DE)

(72) Erfinder: Riedle, Rudolf, Dr., Dipl.-Chem.
Lindenweg 29
D-8263 Burghausen(DE)

**Hexafluoropropyl-oxy-alkyl-silane.**

Die Erfindung betrifft Hexa-fluor-propyl-oxy-alkyl-silane ·r allgemeinen Formel

$$CF_3-CHF-CF_2-O-(CH_2)_m\ SiR_nX_{3-n}.$$

EP 0 075 865 A2

W A C K E R - C H E M I E
G M B H

München, den 4.9.1981 0075865
LC-PAT/Dr.Ra/we

Wa 8113-S

# Hexafluoropropyl-oxy-alkyl-silane

Die Erfindung betrifft neue Verbindungen aus der Gruppe der Fluoralkyl-oxy-alkyl-silane.

Aus US-PS 3 441 431 sind bereits Heptafluor-isopropyl-oxy-alkyl-silane bekanntgeworden. Diese Verbindungen sind durch Addition von Heptafluor-isopropyl-allylether an H-Silane im Autoklaven in Ausbeuten von 70 bis 80 % zugänglich. Die genannten Verbindungen oder deren polymere Abkömmlinge werden z.B. zur Hydrophobierung und Oleophobierung von Textilien eingesetzt.

Aufgabe der Erfindung war es, Fluoralkyl-oxy-alkyl-silane mit hohem Fluorgehalt in der fluorierten Alkylgruppe aufzufinden, die chemisch leicht zugänglich sind - insbesondere auch ohne Einsatz aufwendiger Druckapparaturen, wie Autoklaven und dergleichen.

Gegenstand der Erfindung sind Siliciumverbindungen der allgemeinen Formel

$$CF_3-CHF-CF_2-O-(CH_2)_m\ SiR_nX_{3-n}$$

wobei

R einen, ggf. substituierten, einwertigen Kohlenwasserstoffrest bedeutet mit 1 bis 4 Kohlenstoffatomen,

X für gleiche oder verschiedene Substituenten aus der Reihe der Halogene, der Alkoxygruppen mit 1 bis 6 Kohlenstoffatomen und der Acyloxygruppen mit 1 bis 6 Kohlenstoffatomen steht,

m 2 oder 3 und

n 0,1 oder 2 ist.

Vorzugsweise ist R der Methylrest. X ist vorzugsweise Chlor, Methoxy oder Acetoxy.

Beispiele für Reste R sind der Methyl-, der Ethyl-, der n-Propyl-, der Isopropyl-, der n-Butyl-, der Isobutyl- und der 1-Chlorpropyl-Rest.

Beispiele für X sind der Fluor-, der Chlor-, der Brom- und der Jod-Rest. Beispiele für Alkoxygruppen sind der Methoxy-, der Ethoxy-, der Propoxy- und der Butoxy-Rest. Beispiele für Acyloxygruppen sind der Formyloxy-, der Acetoxy-, der Propionyloxy- und der Butyryloxy-Rest.

Beispiele für erfindungsgemäße Verbindungen sind

Hexafluorpropyloxypropyl-trichlor-silan, Hexafluorpropyloxypropyl-methyl-dichlor-silan, Hexafluorpropyloxypropyl-dimethyl-chlor-silan, Hexafluorpropyloxypropyl-trimethoxy-silan, Hexafluorpropyloxypropyl-methyl-dimethoxy-silan, Hexafluorpropyloxypropyl-dimethyl-methoxy-silan, Hexafluorpropyloxypropyl-triacetoxy-silan, Hexafluorpropyloxypropyl-methyl-diacetoxy-silan, Hexafluorpropyloxypropyl-dimethyl-acetoxysilan, Hexafluorpropyloxyethyl-trichlor-silan, Hexafluorpropyloxyethyl-methyl-dichlor-silan, Hexafluorpropyloxyethyl-dimethyl-chlor-silan, Hexafluorpropyloxyethyl-trimethoxy-silan, Hexafluorpropyloxyethyl-methyl-dimethoxy-silan, Hexafluorpropyloxyethyl-dimethyl-methoxy-silan, Hexafluorpropyloxyethyl-triacetoxy-silan, Hexafluorpropyloxyethyl-methyl-diacetoxy-silan, Hexafluorpropyloxyethyl-dimethyl-acetoxysilan, Hexafluorpropyloxypropyl-ethyl-dichlor-silan, Hexafluorpropyloxypropyl-propyl-dichlor-silan, Hexafluorpropyloxypropyl-butyl-dichlor-silan, Hexafluorpropyloxypropyl-tripropionyloxy-silan, Hexafluorpropyloxypropyl-tributyroxysilan, Hexafluorpropyloxypropyl-tribrom-silan.

Die erfindungsgemäßen Verbindungen sind durch Addition von Hexafluorpropyl-allyl-ether bzw. dem analogen -vinyl-ether an H-Silan zugänglich.

Ein bevorzugtes Verfahren zur Herstellung der erfindungsgemäßen Verbindungen der allgemeinen Formel

$$CF_3-CHF-CF_2-O-(CH_2)_m\ SiR_nX_{3-n}$$

wobei

R einen einwertigen, ggf. substituierten Kohlenwasserstoffrest mit 1 bis 4 Kohlenstoffatomen bedeutet,

X für gleiche oder verschiedene Substituenten aus der Gruppe der Halogene, der Alkoxy- oder Acyloxygruppen mit 1 bis 6 Kohlenstoffatomen steht,

m 2 oder 3 und

n 0,1 oder 2 bedeuten,

ist dadurch gekennzeichnet, daß ein Ether der allgemeinen Formel

$$CF_3-CHF-CF_2-O-(CH_2)_{m-2}-CH=CH_2$$

mit Silan der allgemeinen Formel

$$H-SiR_nX_{3-n}$$

in Gegenwart die Anlagerung von Si-H-Bindung an die olefinische Doppelbindung förderndem Katalysator beim Druck der umgebenden Atmosphäre umgesetzt wird.

Unter der anspruchsgemäßen Bezeichnung "Druck der umgebenden Atmosphäre" wird ein Druck von 1 bar abs. bzw. etwa 1 bar abs. verstanden.

0075865

Die Reaktionstemperaturen liegen typischerweise bei 70 °C bis 120 °C.

Üblicherweise wird die Synthese der erfindungsgemäßen Verbindungen in der Weise durchgeführt, daß der Katalysator im Reaktionsgefäß vorgelegt wird und ein, in der Regel etwa äquimolares Gemisch aus Hexafluorpropyl-alkenylether und Silan dem Reaktionssystem zugetropft wird. Das Zielprodukt wird schließlich durch Destillation aus dem Reaktionsgemisch gewonnen.

Als die Anlagerung von Si-gebundenem Wasserstoff an die olefinische Doppelbindung fördernde Katalysatoren kommen insbesondere sogenannte Hydrosilylierungskatalysatoren, die in homogener Phase eingesetzt werden können, in Betracht. Beispiele für derartige Katalysatoren sind Verbindungen bzw. Komplexe des Platins, des Rhodiums, des Palladiums, des Kobalts, des Nickels und des Eisens. Beispiele hierfür sind $H_2PtCl_6 \cdot 6H_2O$, Platin-Olefin-Komplexe, Platin-Alkohol- oder Platin-Alkoholat-Komplexe, Platin-Ether-Komplexe, Platin-Aldehyd-Komplexe, Platin-Keton-Komplexe, wie Umsetzungsprodukte aus $H_2PtCl_6 \cdot 6H_2O$ und Cyclohexanon, Platin-Vinylsiloxan-Komplexe, wie Platin-Divinyletramethyldisiloxan-Komplexe, bis-(γ-picolin)-Platindichlorid, Trimethylendipyridin-Platindichlorid, Umsetzungsprodukte von Platintetrachlorid mit Olefinen und primärem und/oder sekundärem Amin, sowie Carbonyle des Eisens, des Nickels und des Kobalts.
Die Menge an Katalysator im Reaktionsgemisch beträgt vorzugsweise $10^{-3}$ bis $10^{-7}$ Mol je Grammatom im Reaktionsgemisch anwesenden Si-gebundenen Wasserstoffs.

Die erfindungsgemäßen Verbindungen mit Alkoxy- bzw. Acyloxy-Substitution werden besonders bevorzugt in einer zweistufigen Reaktion dargestellt, wobei in der ersten Reaktionsstufe die entsprechenden Hexafluorpropyl-oxy-alkyl-halogensilane wie oben beschrieben hergestellt werden und in einer zweiten Reaktionsstufe die genannten Halogensilane mit Alkohol bzw. Säureanhydrid umgesetzt werden.

Die genannten Alkoxylierungs- bzw. Acylierungsreaktionen werden in an sich bekannter Weise in flüssiger Phase bei Temperaturen von 40 °C bis 120 °C und Drücken von 0,1 bis 1 bar durchgeführt.

Die erfindungsgemäßen Verbindungen können sowohl in monomerer als auch in polymerer Form zum Hydrophobieren und Oleophobieren von textilem Material, von Papierprodukten, zur Oberflächenbehandlung organischer oder anorganischer Feststoffe, als Antischaum- sowie als Schmiermittel eingesetzt werden.

Die Erfindung wird nun anhand von Beispielen näher erläutert:

Beispiel 1

Herstellung von Hexafluorpropyl-oxy-propyltrichlor-silan

In einem Reaktionskolben werden 5 ml Katalysatorlösung vorgelegt, die durch Lösen von 1,94 g Tetrachlorodioctendiplatin (II) in 100 ml Chloroform hergestellt wurde. Es wird unter Rühren innerhalb von 2 Stunden ein Gemisch aus 2,08 kg (10 Mol) Allylhexyfluorpropylether und 1,36 kg (10 Mol) Trichlorsilan zugetropft. Die Reaktionstemperatur betrug 100 °C. Das Reaktionsgemisch wurde noch 1 Stunde unter Rühren auf dieser Temperatur gehalten. Schließlich wurde das Zielprodukt durch Vakuumdestillation in einer Ausbeute von 3,2 kg entsprechend 93,1 % der Theorie als farblose Flüssigkeit vom Siedepunkt 81,5 °C bei 15 mbar erhalten.

Brechungsindex $n_D^{25}$ = 1,3818, Dichte $D^{25}$ = 1,47 g/ml, Viskosität $\gamma^{25}$ = 2,0 $mm^2/s$.

Beispiel 2

Herstellung von Hexafluorpropyl-oxy-propyl-methyl-dichlorsilan

Die Arbeitsweise gemäß Beispiel 1 wurde wiederholt, mit der Abänderung, daß anstatt des Trichlorsilans 1,15 kg (10 Mol) Methyldichlorsilan eingesetzt wurden.

Es wurden in einer Ausbeute von 2,96 kg entsprechend 91,6 % der Theorie Hexafluorpropyl-oxy-propyl-methyl-dichlorsilan als farblose Flüssigkeit vom Siedepunkt 81 °C bei 15 mbar erhalten.

Brechungsindex $n_D^{25}$ = 1,3781; Dichte $D^{25}$ = 1,36 g/ml; Viskosität $\nu^{25}$ = 2,3 $mm^2/s$.

Beispiel 3

Herstellung von Hexafluorpropyl-oxy-propyl-trimethoxy-silan

In einem Reaktionskolben, der mit Rührer, Abgasleitung, Bodenventil, Destillationsvorrichtung und Druckhaltesystem ausgestattet war, wurden 1,37 kg (4 Mol) Hexafluorpropyl-oxy-propyl-trichlor-silan (gemäß Beispiel 1) auf 50 °C erwärmt. Anschließend wurde im Reaktionssystem ein Druck von 0,2 bar abs. eingestellt. Danach wurden unter Rühren und Aufrechterhalten einer Reaktionstemperatur von 50 °C über das Bodenventil innerhalb von 40 Minuten 0,51 kg (16 Mol) flüssiges Methanol in das Reaktionssystem eingeführt. Dabei destillierte überschüssiges Methanol ab.

Das Zielprodukt wurde anschließend durch Vakuumdestillation in einer Ausbeute von 1,24 kg entsprechend 93,8 % der Theorie als farblose Flüssigkeit vom Siedepunkt 93,5 °C bei 15 mbar erhalten.

Brechungsindex $n_D^{25}$ = 1,3598; Dichte $D^{25}$ = 1,27 g/ml; Viskosität $\nu^{25}$ = 2,2 $mm^2/s$.

Beispiel 4

Herstellung von Hexafluorpropyl-oxy-propyl-methyl-dimethoxy-silan

Es wurde analog Beispiel 3 gearbeitet, wobei 1,29 kg (4 Mol) Hexafluorpropyl-oxy-propyl-methyl-dichlor-silan (gemäß Beispiel 2) und 0,32 kg (10 Mol) Methanol eingesetzt wurden.

Es wurde in einer Ausbeute von 1,15 kg entsprechend 91,4 % der Theorie Hexafluorpropyl-oxy-propyl-methyl-dimethoxy-silan als farblose Flüssigkeit vom Siedepunkt 83,5 °C bei 15 mbar erhalten.

Brechungsindex $n_D^{25}$ = 1,3617; Dichte $D^{25}$ = 1,23 g/ml; Viskosität $\nu^{25}$ = 2,2 $mm^2/s$.

Beispiel 5

Herstellung von Hexafluorpropyl-oxy-propyl-triacetoxy-silan

In einem Reaktionskolben mit Destillationsvorrichtung wurden beim Druck der umgebenden Atmosphäre (ca. 1 bar abs.) 1,37 kg (4 Mol) Hexafluorpropyl-oxy-propyl-trichlor-silan (gemäß Beispiel 1) vorgelegt. Im Verlauf von 2 Stunden wurden 1,23 kg (12 Mol) Essigsäureanhydrid zugetropft. Die Reaktionstemperatur betrug 100 °C. Das bei der Reaktion entstehende Acetylchlorid wurde ständig abdestilliert.

Das Zielprodukt wurde schließlich durch Vakuumdestillation erhalten. In einer Ausbeute von 1,39 kg entsprechend 83,8 % der Theorie wurde Hexapropyl-oxy-propyl-triacetoxy-silan als farblose Flüssigkeit vom Siedepunkt 114 °C bei 1 mbar erhalten.

Brechungsindex $n_D^{25}$ = 1,3836; Dichte $D^{25}$ = 1,32 g/ml; Viskosität $\nu^{25}$ = 24,5 $mm^2/s$.

Beispiel 6

Herstellung von Hexafluorpropyl-oxy-propyl-methyl-diacetoxy-silan

Es wurden analog Beispiel 5 1,29 kg (4 Mol) Hexafluorpropyl-oxy-propyl-methyl-dichlor-silan mit 0,82 kg (8 Mol) Essigsäureanhydrid umgesetzt.

In einer Ausbeute von 1,20 kg entsprechend 81,0 % der Theorie wurde Hexafluorpropyl-oxy-propyl-methyl-diacetoxy-silan als farblose Flüssigkeit vom Siedepunkt 89 °C bei 1 mbar erhalten.

Brechungsindex $n_D^{25}$ = 1,3792; Dichte $D^{25}$ = 1,28 g/ml; Viskosität $\nu^{25}$ = 11,1 $mm^2/s$.

0075865

P a t e n t a n s p r ü c h e

1. Siliciumverbindungen der allgemeinen Formel

$$CF_3-CHF-CF_2-O-(CH_2)_m\ SiR_nX_{3-n}$$

wobei

R einen, ggf. substituierten, einwertigen Kohlenwasserstoffrest bedeutet mit 1 bis 4 Kohlenstoffatomen,

X für gleiche oder verschiedene Substituenten aus der Reihe der Halogene, der Alkoxygruppen mit 1 bis 6 Kohlenstoffatomen und der Acyloxygruppen mit 1 bis 6 Kohlenstoffatomen steht,

m 2 oder 3 und

n 0,1 oder 2 ist.

2. Verfahren zur Herstellung von Verbindungen nach Anspruch 1, d a d u r c h g e k e n n z e i c h n e t , daß Ether der allgemeinen Formel

$$CF_3-CHF-CF_2-O-(CH_2)_{m-2}-CH=CH_2$$

mit Silan der allgemeinen Formel

$$H-SiR_nX_{3-n}$$

in Gegenwart die Anlagerung von Si-H-Bindung an die olefinische Doppelbindung förderndem Katalysator beim Druck der umgebenden Atmosphäre umgesetzt werden.

3. Verwendung der Verbindungen nach Anspruch 1 zur Hydrophobierung und Oleophobierung.